# EUROPÄISCHE PATENTANMELDUNG

(11) **EP 4 501 763 A1**
(43) Veröffentlichungstag der Anmeldung: **05.02.2025**
(21) Anmeldenummer: 23189153.2
(22) Anmeldetag: 02.08.2023
(51) Int. Cl.: B62J 6/00, B62J 15/00, B62J 6/04

(54) **BELEUCHTUNGSEINRICHTUNG ZUR MONTAGE AN EINEM SCHUTZBLECH EINES FAHRZEUGS**

(71) Anmelder: Amphenol Mobile Connector Solutions, 74080 Heilbronn (DE)
(72) Erfinder: SCHEWE, Eckhard, 74076 Heilbronn (DE); SHAO, Shawn, Changzhou, 213031 (CN); ZHU, Eric, New North District, Changzhou, Jiangsu (CN)
(74) Vertreter: Staeger & Sperling Partnerschaftsgesellschaft mbB

(57) **Zusammenfassung**

Die Erfindung betrifft eine Beleuchtung (1), insbesondere Zweiradleuchte zur Befestigung an einer Wandung oder einem Schutzblech (10) umfassend einen Beleuchtungskörper (20) mit einem Leuchtmittel (21) und einer dem Leuchtmittel (21) abgewandten Montagebasis (30) an der eine sich im Öffnungsquerschnitt oder Durchmesser verjüngende Einstecckontur (31) zur Durchsteckmontage durch eine Wandung oder ein Schutzblech (10) vorgesehen ist, die von elastisch verformbaren Wandungsabschnitten (32) begrenzt ist, welche sich axial in eine Montagerichtung X erstrecken und ausgebildet ist zur klemmenden Aufnahme eines in die Einsteckkontur (31) einsteckbaren einen Haltekopf aufweisendes Befestigungsmittel (40).

## Beschreibung

Die Erfindung betrifft eine Beleuchtungseinrichtung zur Montage an einem Schutzblech eines Fahrzeugs, insbesondere eines Fahrrads oder Zweirads sowie ein Verfahren zur vereinfachten Montage einer solchen Beleuchtungseinrichtung bzw. Rückleuchte.

Im Stand der Technik sind diverse Lösungen bekannt, wie eine Beleuchtungseinrichtung insbesondere ein Rücklicht am Fahrrad und zwar insbesondere an einem Schutzblech befestigt wird.

Bei der Fahrradbeleuchtung wird zwischen Batteriebeleuchtung und Dynamobeleuchtung unterschieden. Als Leuchtmittel kommen dabei neben dem klassischen 6 Volt- oder 12 Volt-Rücklicht auch Leuchtdioden und andere Leuchtmittel zum Einsatz.

So wird in der DE 197 58 551 A1 eine Fahrzeugrückleuchte mit einer Hauptabstrahlrichtung, insbesondere für Fahrräder, mit mindestens zwei Leuchtdioden als Fahrlichtquelle und/oder Standlichtquelle und mit einer lichtdurchlässigen Abdeckung beschrieben. Die Leuchte ist mit komplexen Halterungen am Schutzblech befestigt.

Aus der DE 20018683 U1 ist eine, in ein nach hinten offenes Schutzblech komplett einsteckbare, Rückleuchte bekannt. Das hintere Schutzblech wird hierzu so geändert und modifiziert, das es eine Aufnahme für das Rücklicht bildet. Eine solche Lösung verkürzt aber den Schutz des Schutzbleches und ist nicht universell für unterschiedliche Kombinationen von Leuchten und Schutzblechvarianten möglich, was ein erheblicher Nachteil darstellt.

Andere Lösungen sehen ein Integrieren von Befestigungsvorrichtungen in einem Schutzblech bereits bei der Herstellung des Schutzblechs vor. Auch diese Lösung hat diverse Nachteile, da dann bereits die Position des Schutzblechs am Fahrrad bekannt sein muss und eine nachträgliche Änderung nicht möglich ist.

Ein grundsätzlicher Nachteil besteht darin, dass die Montage der Beleuchtung in aller Regel eine Demontage des Reifens erfordert, da man ansonsten nicht oder nur erschwert mit einem Werkzeug an die gewünschte Position kommt, um eine Schraube oder Befestigungsmittel zu betätigen. Wünschenswert wäre eine Lösung, welche die Befestigung an einem Schutzblech nicht nur erleichtert, sondern universell an unterschiedlichen Ausführungen und Formen von Schutzblechen ermöglicht. Ferner soll auch eine schnelle Demontage für den Fall einer Reparatur oder eines Austausches möglich sein. Darüber hinaus soll auch eine vielfältige Variation von Rückleuchten oder Leuchten für Schutzblechvarianten eine Montage gleichermaßen möglich machen.

Die Erfindung lässt sich aber nicht nur bei Rückleuchten von Zweirädern einsetzen, sondern bei jedweder Montagesituation, wo an einer Wandung eine Montage eine Befestigungsmittel von Hinten erforderlich ist.

Eine weitere Problematik betrifft die Dichtheit der Beleuchtung. Es ist gleichzeitig sicher zu stellen, dass die Montagemittel keine Öffnungen oder Spalte benötigen, an denen Wasser oder Feuchtigkeit in die Leuchte eindringen kann.

Der Erfindung liegt deshalb die Aufgabe zugrunde, die vorgenannten Nachteile zu überwinden und eine besser und universell montierbare Lösung vorzusehen, um Leuchten an Schutzblechen und Wandungen zu befestigen.

Diese Aufgabe wird durch die Merkmalskombination gemäß Patentanspruch 1 gelöst.

Erfindungsgemäß wird daher eine Beleuchtung, insbesondere Zweiradleuchte zur Befestigung an einer Wandung oder einem Schutzblech vorgesehen umfassend einen Beleuchtungskörper mit einem darin aufgenommenen Leuchtmittel und einer dem Leuchtmittel abgewandten Montagebasis, an der eine sich im Öffnungsquerschnitt oder Durchmesser verjüngende Einsteckkontur zur Durchsteckmontage durch eine Wandung oder ein Schutzblech vorgesehen ist. Weiter ist vorgesehen, dass die Einsteckkontur von elastisch verformbaren Wandungsabschnitten begrenzt ist, welche sich axial in die Montagerichtung X erstrecken und bestimmungsgemäß ausgebildet ist zur klemmenden Aufnahme eines in die Einsteckkontur einsteckbares, einen Haltekopf aufweisendes, Befestigungsmittel.

In einer bevorzugten Ausgestaltung der Erfindung kann das Haltemittel eine Schraube sein, insbesondere eine Schraube mit einem konisch zulaufenden Schraubenschaft und einem Schraubenkopf.

Mit einer solchen Konzeption lässt sich das Befestigungsmittel in die zumindest abschnittsweise korrespondierend geformte Aufnahme in der Einsteckkontur einstecken und dort klemmend lagern, so dass eine Montage auf einfache Weise erfolgen kann.

Weiter vorteilhaft ist es, wenn ferner ein separates Leuchtengehäuse mit einem Boden vorgesehen ist, mit einer, vorzugsweise zentralen, Öffnung durch die sich die Einsteckkontur hindurch erstreckt. Das Leuchtengehäuse ist der Aufnahmekorpus für den Beleuchtungskörper, welcher z. B. mit Vorteil ein LED-Leuchtenkörper sein kann.

Die genannte Öffnung ist bevorzugt als topfartige Öffnung ausgebildet, umgeben von einer rohrförmigen Wandung, die sich entgegen der Montagerichtung X (sozusagen parallel) vom Boden des Leuchtengehäuses weg erstreckt.

In einer weiteren vorteilhaften Ausgestaltung der Erfindung ist vorgesehen, dass zwischen der Außenfläche der rohrförmigen Wandung am Leuchtengehäuse und der Außenfläche der Einsteckkontur des Leuchtenkörpers eine um die rohförmige Wandung umlaufende Dichtung angeordnet ist. Denkbar sind aber auch im Querschnitt andere Ausgestaltungen. Bevorzugt ist eine runde zylinderförmige Wandung.

Weiter vorteilhaft ist eine Ausgestaltung bei der endseitig in der Einsteckkontur ein Bodenabschnitt vorgesehen ist, der die Einsteckkontur gegenüber einem Bereich des Beleuchtungskörpers verschließt, in dem das Leuchtmittel vorgesehen ist, nach dem Konzept eines Sackloches. Somit ist der Boden nicht offen, sondern geschlossen ausgebildet.

In einer ebenfalls vorteilhaften Ausführungsform ist vorgesehen, dass das Leuchtengehäuse um die zentrale topfartige Öffnung herum eine weitere, nämlich zweite rohrförmigen Wandung besitzt, die sich ebenfalls entgegen der Montagerichtung X vom Boden weg erstreckt. Die Länge bzw. Höhe der Wandung überragt bevorzugt die Länge der inneren Wandung, die mit der Steckkontur über die erste Dichtung zusammenwirkt. Mit Vorteil wird hier eine zweite Dichtung vorgesehen und zwar zwischen der zweiten rohrförmigen Wandung und dem Beleuchtungskörper, die innen umlaufend entlang der (äußeren, höheren) Wandung vorgesehen ist.

Ebenfalls von Vorteil ist eine Ausgestaltung bei der zwischen der zweiten rohrförmigen Wandung und dem Beleuchtungskörper ein umlaufender Haltering zur Halterung und/oder Lagerung des Beleuchtungskörpers an der Wandung vorgesehen ist. Der Haltering lagert in einer bevorzugten Variante gegen die Dichtung.

Es hat sich weiter als günstig erwiesen, wenn die elastisch verformbaren Wandungsabschnitte aus wenigstens zwei (vorzugsweise drei oder vier) teilzylindermantelfömigen Armen oder Zungen gebildet werden, die durch einen axial verlaufenden Spalt jeweils voneinander getrennt sind. Es können auch eine Vielzahl lamellenartiger Zungen Verwendet werden. Anders ausgedrückt, werden zylindrisch geformte Wandabschnitte durch eine entsprechende Anzahl axial verlaufende Spalte getrennt, so dass einzelne Zungen entstehen, die aufgrund ihres jeweils freien Endes federnd bzw. elastisch auslenkbar sind. Denkbar ist auch eine starre d.h. unelastische bis nahezu unelastische Lösung, bei der die Arme bzw. Zungen nahezu starr ausgebildet sind, aber dann das korrespondierende Befestigungsmittel ausreichend elastisch klemmend ausgebildet ist.

Bevorzugt ist das Konzept so umgesetzt, dass die, durch die elastisch verformbaren Wandungsabschnitte gebildete Einsteckkontur im Querschnitt (in Montagerichtung betrachtet) zunimmt und insbesondere in Montagerichtung X betrachtet zumindest abschnittsweise konisch oder teilkegelförmig ausgebildet ist.

Ein entsprechend korrespondierend geformtes, insbesondere korrespondierend konisch oder teilkegelförmig gestaltetes Befestigungsmittel, hat so einen besonders guten Form- und Kraftschluss, wenn es bestimmungsgemäß in die Einsteckkontur eingeführt wurde.

Das Befestigungsmittel ist zu klemmenden Einsteckmontage in die Einstecckontur zum Beispiel eine Schraube, insbesondere konisch zulaufende Schraube oder besitzt einen Einsteckdom, der konisch oder kegelförmig oder teilkegelförmig geformt ist. Weiter ist mit Vorteil vorgesehen, dass an der Außenkontur des Einsteckdoms als Haltemittel Vorsprünge, Stege, schraubenartige oder gewindeartig verlaufende Konturen vorgesehen sind, die insbesondere elastisch verformbar sind oder sich gegebenenfalls in die Innenkontur einschneiden.

Ein weiterer Aspekt der vorliegenden Erfindung betrifft neben der Beleuchtung als solchen auch das Verfahren zur Montage einer solchen Beleuchtung zum Beispiel an einem Schutzblech eines Fahrrads mit den folgenden Schritten:
a. Durchstecken der Einsteckkontur durch die Öffnung in einer Wandung oder einem Schutzblech (welches ein entsprechende Montageöffnung aufweist)
b. Einführen des Befestigungsmittels in die Einsteckkontur derart, bis der Haltekopf des Befestigungsmittels an der Rückseite des Schutzbleches oder einem dazwischen eingefügten Lagerungsmittel (z.B. Distanzscheibe oder dergleichen) mittelbar oder unmittelbar anliegt und in dieser Position klemmend mit der Einsteckkontur zusammenwirkt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittansicht durch ein Ausführungsbeispiel einer erfindungsgemäßen Beleuchtung montiert an einem Schutzblech und
- Fig. 2: eine Detailansicht der Einsteckkontur der Beleuchtung gemäß Figur 1.

Die Figuren sind beispielhaft schematisch. Gleiche Bezugszeichen in den Figuren weisen auf gleiche funktionale und/oder strukturelle Merkmale hin.

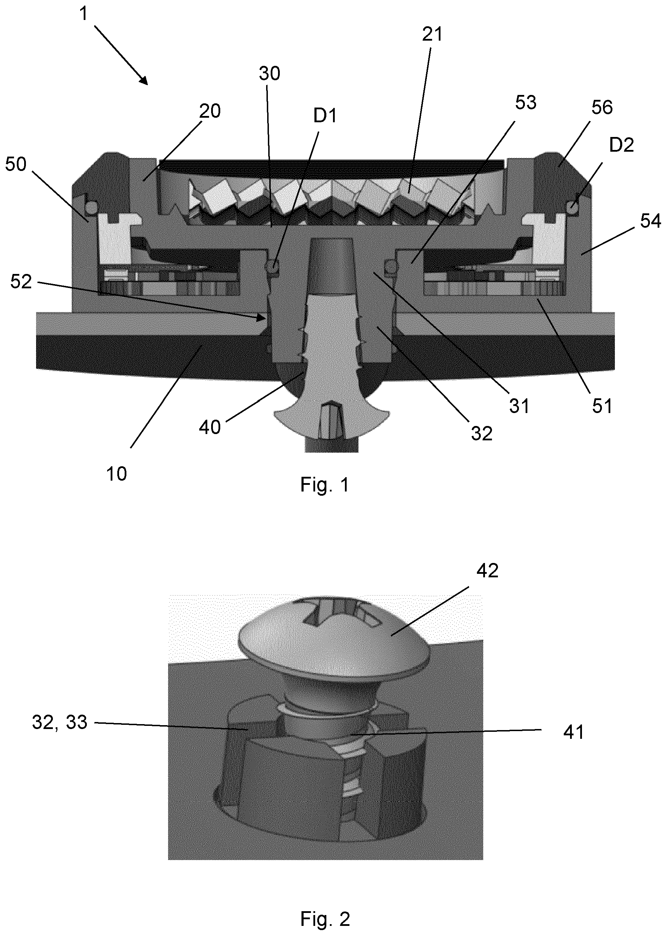

Die Figur 1 zeigt eine beispielhafte Zweiradleuchte 1 befestigt an einem Schutzblech 10. Die Beleuchtung 1 umfasst einen Beleuchtungskörper 20 mit einem LED-Leuchtmittel 21 und besitzt eine dem Leuchtmittel 21 abgewandte Montagebasis 30. An der Montagebasis 30 befindet sich eine im Öffnungsquerschnitt oder Durchmesser verjüngende Einsteckkontur 31 zur Durchsteckmontage durch die Öffnung im Schutzblech 10. Die Länge der Einsteckkontur 31 ist dabei so gewählt, dass diese durch typische Dicken von Schutzblechen ausreichend hindurchragt. Endseitig in der Einsteckkontur 31 ist ein Bodenabschnitt vorgesehen, der die Einsteckkontur 31 gegenüber einem inneren Bereich des Beleuchtungskörpers 20 verschließt, in dem das LED-Leuchtmittel 21 vorgesehen ist.

Die Einsteckkontur 31 ist gebildet von vier elastisch verformbaren Wandungsabschnitten 32, wie diese auch gut in der Figur 2 gezeigt sind. Diese elastisch verformbaren Wandungsabschnitte 32 sind somit aus vier teilzylindermantelfömigen Zungen 33 gebildet, die durch einen axial verlaufenden Spalt 34 jeweils voneinander getrennt sind. Die Wandungsabschnitte 32 erstrecken sich axial in die Montagerichtung X und sind ausgebildet zur klemmenden Aufnahme des in die Einsteckkontur 31 eingesteckten Befestigungsmittel 40, welches in dem gezeigten Beispiel eine Schraube mit einem Schraubenkopf 41 ist.

Erkennbar ist, dass der Beleuchtungskörper 20 topfartig in einem separaten Leuchtengehäuse 50 aufgenommen ist. Das Leuchtengehäuse 50 ist mit einem Boden 51 ausgestattet, mit einer zentralen Öffnung 52, die zur Montage korrespondierend vor der Öffnung im Schutzblech gebracht wird. Durch diese Öffnung 52 hindurch erstreckt sich die Einsteckkontur 31 hindurch.

Die Öffnung 52 ist als topfartige Öffnung umgeben von einer rohrförmigen Wandung 53 ausgebildet, die sich, wie in der Figur 1 erkennbar, entgegen der Montagerichtung X vom Boden 51 des Leuchtengehäuse 50 weg erstreckt. Zwischen der Außenfläche der rohrförmigen Wandung 53 und der Außenfläche der Einsteckkontur 31 ist eine um die Wandung 53 umlaufende Dichtung D1 angeordnet.

Das Leuchtengehäuse 50 besitz um die zentrale topfartige Öffnung herum eine weitere, nämlich zweite rohrförmigen Wandung 54, die sich ebenfalls entgegen der Montagerichtung X vom Boden 51 weg erstreckt. Zwischen der zweiten rohrförmigen Wandung 54 und dem Beleuchtungskörper 20 ist eine weitere, nämlich zweite Dichtung D2 innen umlaufend entlang der Wandung 54 vorgesehen. In dem dadurch gebildeten ringförmigen und abgedichteten Kanal K können weitere Bauteile, wie auch Elektronik für die LED und dergleichen untergebracht sein.

Weiter ist in der Figur 1 erkennbar, dass zwischen der zweiten rohrförmigen Wandung 54 und dem Beleuchtungskörper 20 ein umlaufender Haltering 56 zur Halterung und/oder Lagerung des Beleuchtungskörpers 20 an der Wandung 54 vorgesehen ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Beleuchtung (1), insbesondere Zweiradleuchte zur Befestigung an einer Wandung oder einem Schutzblech (10) umfassend einen Beleuchtungskörper (20) mit einem Leuchtmittel (21) und einer dem Leuchtmittel (21) abgewandten Montagebasis (30) an der eine sich im Öffnungsquerschnitt oder Durchmesser verjüngende Einsteckkontur (31) zur Durchsteckmontage durch eine Wandung oder ein Schutzblech (10) vorgesehen ist, die von elastisch verformbaren Wandungsabschnitten (32, 33) begrenzt ist, welche sich axial in eine Montagerichtung X erstrecken und ausgebildet sind zur klemmenden Aufnahme eines in die Einsteckkontur (31) einsteckbaren, einen Haltekopf (42) aufweisendes, Befestigungsmittel (40).

2. Beleuchtung (1) nach Anspruch 1, **dadurch gekennzeichnet, dass** ferner ein separates Leuchtengehäuse (50) mit einem Boden (51) vorgesehen ist, mit einer, vorzugsweise zentralen, Öffnung (52) durch die sich die Einsteckkontur (31) hindurch erstreckt.

3. Beleuchtung (1) nach Anspruch 2, **dadurch gekennzeichnet, dass** die Öffnung (52) als topfartige Öffnung umgeben von einer rohrförmigen Wandung (53) ausgebildet ist, die sich entgegen der Montagerichtung X vom Boden (51) weg erstreckt.

4. Beleuchtung (1) nach Anspruch 3, **dadurch gekennzeichnet, dass** zwischen der Außenfläche der rohrförmigen Wandung (53) und der Außenfläche der Einsteckkontur (31) eine um die Wandung (53) umlaufende Dichtung (D1) angeordnet ist.

5. Beleuchtung (1) nach einem der vorhergehenden Ansprüche, **dadurch gekennzeichnet, dass** endseitig in der Einsteckkontur (31) ein Bodenabschnitt vorgesehen ist, der die Einsteckkontur (31) gegenüber einem Bereich des Beleuchtungskörpers (20) verschließt, in dem das Leuchtmittel (21) vorgesehen ist.

6. Beleuchtung (1) nach einem der Ansprüche 2 bis 5, **dadurch gekennzeichnet, dass** das Leuchtengehäuse (50) um die zentrale topfartige Öffnung herum eine weitere, nämlich zweite rohrförmigen Wandung (54) besitzt, die sich ebenfalls entgegen der Montagerichtung X vom Boden (51) weg erstreckt.

7. Beleuchtung (1) nach Anspruch 6, **dadurch gekennzeichnet, dass** zwischen der zweiten rohrförmigen Wandung (54) und dem Beleuchtungskörper (20) eine weitere, nämlich zweite Dichtung (D2) innen umlaufend entlang der Wandung (54) vorgesehen ist.

8. Beleuchtung (1) nach Anspruch 6 oder 7, **dadurch gekennzeichnet, dass** zwischen der zweiten rohrförmigen Wandung (54) und dem Beleuchtungskörper (20) ein umlaufender Haltering (56) zur Halterung und/oder Lagerung des Beleuchtungskörpers (20) an der Wandung (54) vorgesehen ist.

9. Beleuchtung (1) nach Anspruch 8, **dadurch gekennzeichnet, dass** die zweite Dichtung (D2) gegen den Haltering (56) lagert.

10. Beleuchtung (1) nach einem der vorhergehenden Ansprüche, **dadurch gekennzeichnet, dass** die elastisch verformbaren Wandungsabschnitte (32) aus wenigstens zwei teilzylindermantelfömigen Armen (33) gebildet werden, die durch einen axial verlaufenden Spalt (34) jeweils voneinander getrennt sind.

11. Beleuchtung (1) nach einem der vorhergehenden Ansprüche, **dadurch gekennzeichnet, dass** die durch die elastisch verformbaren Wandungsabschnitte (32) gebildete Einsteckkontur (31) im Querschnitt zunimmt und insbesondere in Montagerichtung X betrachtet zumindest abschnittsweise konisch oder kegelförmig ausgebildet ist.

12. Beleuchtung (1) nach einem der vorhergehenden Ansprüche, **dadurch gekennzeichnet, dass** das Befestigungsmittel (40) zu klemmenden Einsteckmontage in die Einsteckkontur (31) eine Schraube, insbesondere konisch zulaufende Schraube ist oder einen Einsteckdom (41) besitzt, der konisch oder kegelförmig geformt ist.

13. Beleuchtung (1) nach Anspruch 12, **dadurch gekennzeichnet, dass** an der Außenkontur des Einsteckdoms (41) als Haltemittel Vorsprünge, Stege, schraubenartige oder gewindeartig verlaufende Konturen vorgesehen sind, die insbesondere elastisch verformbar sind.

14. Verfahren zur Montage einer Beleuchtung (1) nach einem der vorhergehenden Ansprüche mit den folgenden Schritten:
a. Durchstecken der Einsteckkontur (31) durch die Öffnung in einer Wandung oder einem Schutzblech (10)
b. Einführen des Befestigungsmittels (40) in die Einsteckkontur (31) derart, bis der Haltekopf (42) des Befestigungsmittels (40) an der Rückseite des Schutzbleches oder einem dazwischen eingefügten Lagerungsmittel anliegt und in dieser Position klemmend mit der Einsteckkontur (31) zusammenwirkt.
